# EUROPÄISCHE PATENTANMELDUNG

(11) **EP 2 031 739 A2**
(43) Veröffentlichungstag der Anmeldung: **04.03.2009**
(21) Anmeldenummer: 08163043.6
(22) Anmeldetag: 27.08.2008
(51) Int. Cl.: H02K 9/19

(54) **Schienenfahrzeug mit Klima-Wärmetauscher zur Wärmerückgewinnung**

(30) Priorität: 28.08.2007 DE 102007040570
(71) Anmelder: Siemens Aktiengesellschaft, 80333 München (DE)
(72) Erfinder: Augsburger, Friedemann, 90518, Altdorf (DE); Kistner, Michael, 96163, Gundelsheim (DE)

(57) **Zusammenfassung**

Die Erfindung betrifft ein Schienenfahrzeug mit einem Kühlkreislauf für zu kühlende Aggregate des Schienenfahrzeugs, wie ein Umrichter (U) und Fahrmotoren (FM1, FM2, FM3, FM4) und/oder ein Transformator und/oder andere zu kühlende Großkomponenten des Schienenfahrzeugs, mit einem Rück-Wärmetauscher (RW) zur Bereitstellung einer geeigneten Vorlauftemperatur eines Kühlmediums des Kühlkreislaufs und einem Klima-Wärmetauscher (KW) zur Wärmerückgewinnung aus dem Kühlkreislauf für Klimatisierungszwecke, wobei der Klima-Wärmetauscher (KW) in Serie zu dem Rück-Wärmetauscher (RW) stromabwärts des Umrichters (U) angeordnet ist.

## Beschreibung

Die Erfindung bezieht sich auf ein Schienenfahrzeug mit einem Kühlkreislauf für zu kühlende Aggregate des Schienenfahrzeugs, wie ein Umrichter und Fahrmotoren des Schienenfahrzeugs, mit einem Rück-Wärmetauscher zur Bereitstellung einer geeigneten Vorlauftemperatur eines Kühlmediums des Kühlkreislaufs und einem Klima-Wärmetauscher zur Wärmerückgewinnung aus dem Kühlkreislauf für Klimatisierungszwecke.

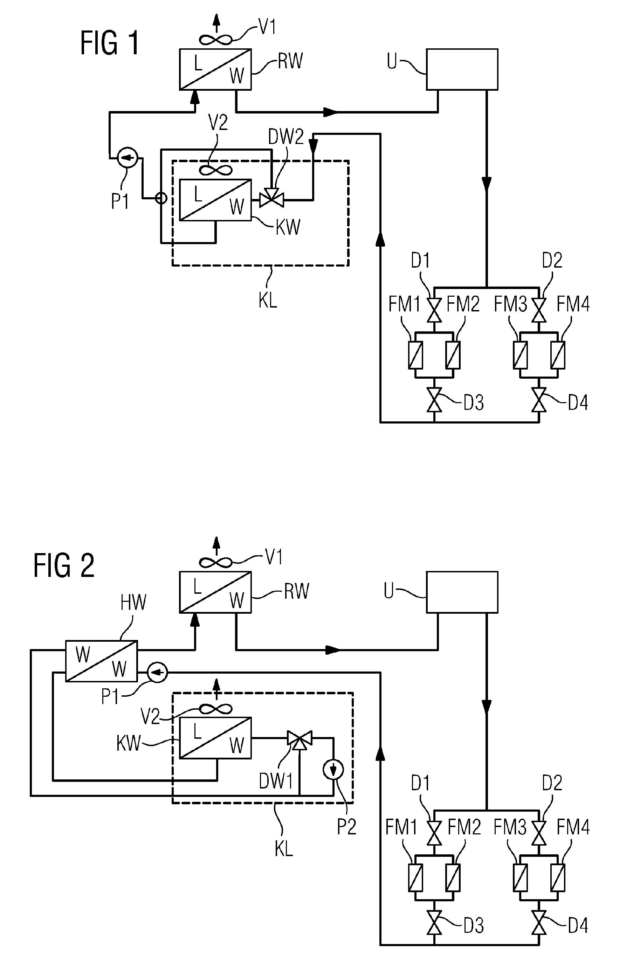

Bei einem bekannten Schienenfahrzeug ist der Kühlkreislauf derart ausgelegt, dass der Klima-Wärmetauscher mit einem Heiz-Wärmetauscher in Verbindung steht. Dieses Ausführungsbeispiel aus dem Stand der Technik ist in Figur 2 in Form eines schematischen strömungstechnischen Schaltbildes veranschaulicht.

Wesentliches Element des Kühlkreislaufs ist ein Rück-Wärmetauscher RW, in den erwärmtes Kühlmedium nach Passieren sämtlicher zu kühlender Aggregate einströmt. Der Rück-Wärmetauscher hat die Aufgabe, auf seiner Ausgangsseite eine solche Vorlauftemperatur des Kühlmediums bereitzustellen, das sämtliche stromabwärts befindlichen zu kühlenden Aggregate, insbesondere der temperaturempfindliche Umrichter U, Kühlmedium mit geeigneter Temperatur erhalten.

Das Kühlmedium, insbesondere Wasser, wird mit Hilfe eines Ventilators V1 in dem Rück-Wärmetauscher RW auf die geeignete Vorlauftemperatur gebracht.

Von dem Rück-Wärmetauscher RW aus erreicht das Kühlmedium den Umrichter U, von dem es weiter in Richtung von Fahrmotoren FM1, FM2 strömt. Zur Symmetrisierung des Kühlmittelstroms dienen auf Eingangs- und Ausgangsseiten der Fahrmotoren FM1, FM2, FM3, FM4 vorgesehene Drosselventile D1, ..., D4.

Von einer Ausgangsseite der Fahrmotoren FM1, FM2, FM3, FM4 aus gelangt das Kühlmedium zu einem Heiz-Wärmetauscher HW, der als Wasser-/Wasser-Wärmetauscher ausgebildet ist. Dabei ist auf einer Primärseite des Heiz-Wärmetauschers HW eine Pumpe P1 vorgesehen. Nach Passieren der Primärseite des Heiz-Wärmetauschers HW gelangt das Kühlmedium zurück zum Rück-Wärmetauscher RW.

Auf einer Sekundärseite des Heiz-Wärmetauchers HW ist ein einem Klimagerät zugehöriger Klima-Wärmetauscher KW mit zugehörigem Ventilator V2 angeordnet. Über ein Dreiwegeventil DW1 wird ein Kühlmittelvolumenstrom durch den Klima-Wärmetauscher KW geregelt. Eine Pumpe P2 bewegt das Kühlmedium auf der Sekundärseite des Heiz-Wärmetauschers HW.

Ein solcher Kühlkreislauf ist komplex aufgebaut und benötigt insbesondere den Heiz-Wärmetauscher und zwei Pumpen zum Bewegen des Kühlmediums sowohl auf der Primär- als auch auf der Sekundärseite dieses Wärmetauschers.

Ausgehend hiervon liegt der Erfindung die Aufgabe zu Grunde, ein Schienenfahrzeug mit einem einfacher aufgebauten Kühlkreislauf bereitzustellen.

Diese Aufgabe wird bei dem eingangs genannten Schienenfahrzeug dadurch gelöst, dass der Klima-Wärmetauscher in Serie zu dem Rück-Wärmetauscher stromabwärts des Umrichters angeordnet ist.

Durch Eingliedern des Klima-Wärmetauschers in einen einzigen Strömungskreislauf entfällt die im Stand der Technik erforderliche zweite Pumpe, die auf der Sekundärseite des Heiz-Wärmetauschers zum Einsatz kommt.

Da der Klima-Wärmetauscher stromabwärts des Umrichters angeordnet ist, liegt für den Betrieb des Umrichters eine definierte Vorlauftemperatur vor. Dies ist deshalb wichtig, weil gerade der Betrieb des Umrichters hohe Anforderungen an die ihm zur Verfügung gestellte Vorlauftemperatur des Kühlmediums stellt.

Bevorzugt ist der Klima-Wärmetauscher stromabwärts, bezogen auf die Strömungsrichtung des Kühlmediums, eines letzten zu kühlenden Aggregates angeordnet. Dies hat den Vorteil, dass das Kühlmedium an dieser Stelle eine höchste innerhalb des Kühlkreislaufs erreichte Temperatur aufweist, so dass eine entsprechende Wärmemenge dem Kühlmedium für Klimatisierungszwecke entnommen werden kann.

Geeigneter Weise ist der Klima-Wärmetauscher stromabwärts der Fahrmotoren angeordnet, so dass das Kühlmedium den Klima-Wärmetauscher nach Passieren des Umrichters und der Fahrmotoren erreicht.

Zur Regelbarkeit der Entnahme von Wärmemenge aus dem Kühlmedium ist es günstig, wenn eine Eingangsströmungsseite des Klima-Wärmetauschers über ein regelbares Dreiwegeventil mit einer Ausgangsströmungsseite des Klima-Wärmetauschers zur Ausbildung einer Bypass-Leitung verbunden ist. Aufgrund dessen kann eine Kühlmittel-Durchflussmenge des Klima-Wärmetauschers geregelt werden.

Der Klima-Wärmetauscher ist bevorzugt als Wasser-/Luft-Wärmetauscher ausgebildet. Dies bedeutet, dass mit Hilfe eines Ventilators zu erwärmende Luft an dem Klima-Wärmtauscher vorbeigeführt wird, die dann einem Klimagerät des Schienenfahrzeugs zur Verfügung gestellt werden kann.

Zum Gewährleisten kurzer Strömungswege ist es günstig, wenn der Klima-Wärmetauscher in eine Klimaanlage des Schienenfahrzeugs integriert ist.

Ein Ausführungsbeispiel der Erfindung wird nunmehr anhand der Zeichnung noch näher erläutert. Es zeigen:
- Figur 1: ein schematisches, strömungstechnisches Schaltbild eines Kühlkreislaufs für ein Schienenfahrzeug und
- Figur 2: ein dem Stand der Technik zugehöriges schematisches, strömungstechnisches Schaltbild eines Kühlkreislaufs eines Schienenfahrzeugs.

Die nachfolgende Erläuterung eines Ausführungsbeispiels geht von der bereits oben erklärten, dem Stand der Technik zuzurechnenden Ausführungsform aus. Dabei sind insbesondere funktionsgleiche Komponenten des Kühlkreislaufs mit denselben Bezugszeichen versehen.

Wie im Stand der Technik (Fig. 2) dient bei dem Kühlkreislauf nach Fig. 1 ein Rück-Wärmetauscher RW, der auch als Rückkühler bezeichnet werden kann, zum Bereitstellen einer geeigneten Vorlauftemperatur für einen Umrichter U. Der Rück-Wärmetauscher RW ist als Luft-/Wasser-Wärmetauscher ausgebildet und wirkt mit einem Ventilator V1 zusammen.

Der Umrichter U kann beispielsweise mit einer Vorlauftemperatur von 50°C für das Kühlmedium Wasser betrieben werden.

Von dem Umrichter U aus strömt das Kühlmedium weiter in Richtung auf beispielhaft vier Fahrmotoren FM1, FM2, FM3, FM4. Zum Symmetrieren eines Strömungsdurchflusses durch die Fahrmotoren FM1, FM2, FM3, FM4 dienen geeignete Drosselventile D1, ..., D4 (beispielhafte Darstellung). Selbstverständlich können bei weiteren Ausführungsformen der Erfindung noch weitere Fahrmotoren oder aber auch nur ein einzelner vorgesehen sein.

Stromabwärts der Fahrmotoren FM1, FM2 ist ein Klima-Wärmetauscher KW vorgesehen, der in eine Klimaanlage KL des Schienenfahrzeugs integriert ist. Der Klima-Wärmetauscher KW ist als Luft-/Wasser-Wärmetauscher ausgebildet und wirkt daher mit einem Ventilator V2 zusammen, der durch Wärmerückgewinnung aus dem Kühlkreislauf erwärmte Luft der Klimaanlage zuführt.

Dem Klima-Wärmetauscher KW ist ein Dreiwegeventil DW2 vorgeschaltet, welches einen Kühlmediumdurchfluss durch den Klima-Wärmetauscher KW regelt.

Mit Hilfe des Dreiwegeventils DW2 wird ein Strömungsfluss in Richtung auf den Klima-Wärmetauscher KW aufgeteilt auf einen ersten Weg direkt durch den Klima-Wärmetauscher KW und einen zweiten Weg, der durch eine Bypass-Leitung von einer Eingangsseite des Klima-Wärmetauschers KW auf dessen Außengangsseite führt.

Soll beispielsweise ein sehr großes Maß an Wärmemenge dem Kühlmedium entnommen werden, wird der gesamte Strömungsfluss mit Hilfe des Dreiwegeventils DW2 durch den Klima-Wärmetauscher KW hindurchgeführt. Soll demgegenüber von dem Kühlmedium keinerlei Wärmemenge entzogen werden, wird der gesamte Strömungsfluss an dem Klima-Wärmetauscher KW unter Benutzung der Bypass-Leitung vorbeigeführt.

Dies hat zur Folge, dass stromabwärts des Klima-Wärmetauschers KW verschiedene Rücklauf-Temperaturen vorliegen können. Diese Temperatur hängt davon ab, wie viel Wärmemenge dem Kühlmedium an dem Klima-Wärmetauscher KW entnommen wurde.

Stromabwärts des Klima-Wärmetauschers KW ist eine Pumpe P1 vorgesehen, welche das erwärmte Kühlmedium einer Eingangsseite des Rück-Wärmetauschers RW zuleitet, der dann wiederum die geeignete Vorlauftemperatur für den Umrichter U für das Kühlmedium einstellt. Dabei wird ausgenutzt, dass der Rück-Wärmetauscher RW im Wesentlichen unabhängig von der Rücklauftemperatur eine stabile, geeignete Vorlauftemperatur für das Kühlmedium erzeugen kann.

## Patentansprüche

1. Schienenfahrzeug mit einem Kühlkreislauf für zu kühlende Aggregate des Schienenfahrzeugs, wie ein Umrichter (U) und Fahrmotoren (FM1, FM2, FM3, FM4) und/oder ein Transformator und/oder andere zu kühlende Großkomponenten des Schienenfahrzeugs, mit einem Rück-Wärmetauscher (RW) zur Bereitstellung einer geeigneten Vorlauftemperatur eines Kühlmediums des Kühlkreislaufs und einem Klima-Wärmetauscher (KW) zur Wärmerückgewinnung aus dem Kühlkreislauf für Klimatisierungszwecke,
**dadurch gekennzeichnet, dass**
der Klima-Wärmetauscher (KW) in Serie zu dem Rück-Wärmetauscher (RW) stromabwärts des Umrichters (U) angeordnet ist.

2. Schienenfahrzeug nach Anspruch 1,
**dadurch gekennzeichnet, dass**
der Klima-Wärmetauscher (KW) stromabwärts eines, bezogen auf die Strömungsrichtung des Kühlmediums, letzten zu kühlenden Aggregates angeordnet ist.

3. Schienenfahrzeug nach einem der Ansprüche 1 oder 2,
**dadurch gekennzeichnet, dass**
der Klima-Wärmetauscher (KW) stromabwärts der Fahrmotoren (FM1, ..., FM4) angeordnet ist.

4. Schienenfahrzeug nach einem der Ansprüche 1 bis 3,
**dadurch gekennzeichnet, dass**
eine Eingangsströmungsseite des Klima-Wärmetauschers (KW) über ein regelbares Dreiwegeventil (DW2) mit einer Ausgangsströmungsseite des Klima-Wärmetauschers (KW) zur Ausbildung einer Bypass-Leitung verbunden ist.

5. Schienenfahrzeug nach einem der Ansprüche 1 bis 4,
**dadurch gekennzeichnet, dass**
der Klima-Wärmetauscher (KW) als Wasser-/Luft-Wärmetauscher ausgebildet ist.

6. Schienenfahrzeug nach Anspruch 5,
**dadurch gekennzeichnet, dass**
der Klima-Wärmetauscher (KW) in eine Klimaanlage (KL) des Schienenfahrzeugs integriert ist.
